# EUROPEAN PATENT SPECIFICATION

(11) **EP 1 302 107 B1**
(45) Date of publication and mention of the grant of the patent: **12.12.2007**
(21) Application number: 01203802.2
(22) Date of filing: 09.10.2001
(51) Int. Cl.: A01M 7/00, E04C 3/08

(54) **Spraying apparatus**
Sprühgerät
Appareil pulvérisateur

(43) Date of publication of application: 16.04.2003
(73) Proprietor: Kverneland ASA, 4355 Kvernaland (NO)
(72) Inventor: Van Der Marel, Pieter Jan, 2171 DN Sassenheim (NL)
(74) Representative: Voncken, Bartholomeus Maria Ch.

(56) References cited:
- FR-A- 2 595 205
- FR-A- 2 643 831
- FR-A- 2 744 786

## Description

The invention firstly relates to a spraying apparatus for connection to a vehicle, having at least one spraying boom, said spraying boom comprising longitudinally extending top and bottom members and struts linking the top and bottom members, wherein the width of at least one of the top and bottom members and/or the distance between the top and bottom members varies in the longitudinal direction of the spraying boom, wherein the ends of the struts are linked to the respective top and bottom members by means of coupling members defining for the struts a first axis of rotation substantially in parallel to the longitudinal direction of the spraying boom and a second axis of rotation substantially perpendicularly thereto. Such a spraying apparatus already is shown in document FR-A-2.595.205. Herein, the second axis of rotation coincides with the longitudinal direction of the struts.

In such a spraying apparatus the varying width of the top and bottom members and/or the varying distance between the top and bottom members complicates the construction of the spraying boom. Because in such a spring boom the top and bottom members do not extend perfectly in parallel to each other, and because most times struts are used of equal length, the angles between the struts and the top and bottom members vary along the length of the spraying boom. One known way to cope with such a problem is disclosed in FR-A-2.744.786, according to which the struts are welded to the top and bottom members. However, such a solution involves a substantial constructional effort. Although the angles between the struts and the top and bottom members could be maintained substantially equal along the length of the spraying boom by using struts of different length, such a solution however is not preferred in view of the need of struts of different length. Finally, using a spraying boom in which the width of the top and/or bottom members and/or the distance between the top and bottom members does not vary (and thus offers constant angles) results in a spraying boom, of which the mechanical strength along the length thereof is not optimally adapted to the mechanical loads along the length of the spraying boom. Thus such a spraying boom would be excessively heavy.

It is an object of the present invention to provide a spraying apparatus of the type referred to above, in which the disadvantages mentioned before are solved in an easy, but nevertheless effective way.

Thus, according to the present invention, the spraying apparatus is characterized in that the second axis of rotation (7) is oriented such, that by a rotation of the struts (5) around said axis (7) the angle enclosed by the first axis of rotation (6) and the struts (5) is changed. The first axis of rotation and the second axis of rotation allow an adjustment of the struts relative to the respective top and bottom members in accordance with the local angle between the struts and the top and bottom members. As a result, in a very easy manner a spraying boom can be constructed of which the width of at least one of the top and bottom members and/or the distance between the top and bottom members varies in the longitudinal direction for coping with varying mechanical loads, while still using struts of equal length.

In a preferred embodiment of the spraying apparatus according to the invention the top and bottom members of the spraying boom define longitudinally extending, at least partially cylindrical sections, whereas each coupling member is provided with a longitudinally extending clamping part with correspondingly shaped cylindrical recess for the reception of the cylindrical section for defining the first axis of rotation, and wherein the coupling member and a corresponding strut comprise co-operating parts for defining the second axis of rotation. The cylindrical section of the spraying boom and the cylindrical recess of the clamping part together define a hinge with the mentioned first axis of rotation. The co-operating parts of the coupling member and strut likewise define a second hinge with the second axis of rotation.

When the coupling member is adapted for the connection to at least two struts, the spraying boom may be constructed, as is known per se, as a framed construction with adjoining triangular sections.

Further, it is preferred that the coupling member comprises two, preferably identical, member halves which are releasably joined by means of appropriate mounting means. Assembling such a two-part coupling member is extremely simple. The two-member halves are firstly positioned at both sides of the top and bottom members and at both sides of the respective strut, and are then fastened by means of the mounting means. No special skills are required (as would be the case when the struts are welded to the top and bottom members), whereas basic tools are sufficient for constructing the spraying boom.

If, indeed, the coupling member comprises two member halves as defined above, it would be possible that the mounting means comprise bolts that at the same time define each second axis of rotation. In such a manner, the mounting means fulfil two functions: firstly the basic function of holding together the member halves while clampingly receiving the top and bottom members and the struts, and secondly defining the second axis of rotation for the struts. However, it is also possible that the coupling member halves and struts are provided with co-operating projections and recesses to obtain a hinge with second axis of rotation, while the mounting means only hold together the member halves.

Although basically the clamping or holding force between the clamping part and the top and bottom members and/or a corresponding strut could be sufficient for obtaining a rigid construction, it is preferred, that at the interfaces between the coupling members and the top and bottom members and/or the interfaces between the coupling members and the struts an adhesive is applied. The application of an adhesive dramatically increases the strength of the link between the struts and the top and bottom members.

Although it is possible, that the spraying boom of the spraying apparatus comprises multiple top members which are mutually linked by struts and/or multiple bottom members which are mutually linked by struts, it is preferred, that the spraying boom comprises multiple top and/or bottom members which are integrally shaped into profiled top and/or bottom members. In such a manner, only the link between the top members at one hand and the bottom members at the other hand is realised using struts.

The invention further relates to a coupling member for application in a spraying apparatus having at least one spraying boom, said spraying boom comprising longitudinally extending top and bottom members and struts linking the top and bottom members, wherein the width of at least one of the top and bottom members and/or the distance between the top and bottom members varies in the longitudinal direction of the spraying boom.

Such a coupling member is provided with a longitudinally extending clamping part with cylindrical recess for the reception of a longitudinally extending correspondingly shaped cylindrical section of a top or bottom member for defining a first axis of rotation substantially in parallel to the longitudinal direction of the spraying boom, and wherein the coupling member further comprises parts for defining together with co-operating parts of the struts a second axis of rotation substantially perpendicularly to the first axis of rotation.

Preferably the coupling member is provided with parts for defining a second axis of rotation with at least two struts. Still further, it is preferred that the coupling member comprises two, preferably identical, member halves which are releasably joined by means of appropriate mounting means.

Further, as discussed before, it is possible that the coupling member comprises two, preferably identical, member halves which are releasably joined by means of appropriate mounting means.

Finally, the invention also relates to a spraying boom for application in a spraying apparatus, having the characterizing features as set out above.

The invention will now be elucidated by means of the drawing, in which embodiments thereof are illustrated.
Figure 1 shows, perspectively, a part of a spraying boom according to the invention;
figure 2 shows in three different perspective views an embodiment of a coupling member according to the invention, and
figure 3 shows the coupling member of fig. 2 with disassembled member halves.

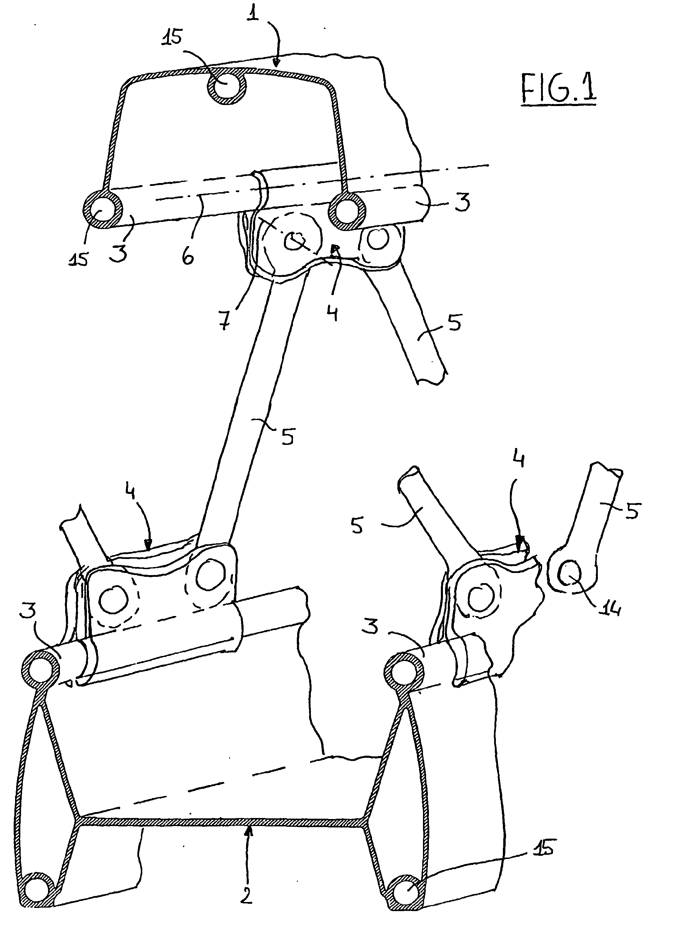

Firstly referring to fig. 1, a spraying boom of a spraying apparatus comprises longitudinally extending top and bottom members 1 and 2, respectively, which in the illustrated embodiment each are integrally shaped as profiled top and bottom members. In an alternative embodiment (not shown) the top and/or bottom member 1,2 comprises separate parts interconnected in any appropiate manner.

Each top and bottom member 1, 2 of the spraying boom defines longitudinally extending, at least partially cylindrical sections 3 for co-operation with coupling members 4. Said coupling members 4 further co-operate with struts 5 such that, as a result of the co-operation between the coupling members 4 and cylindrical sections 3 at one hand and the co-operation between the coupling member 4 and struts 5 on the other hand, the top and bottom members 1, 2 of the spraying boom are linked to each other.

The co-operation between the coupling members 4 and cylindrical sections 3 of the top member and bottom member is such, that a first axis of rotation 6 (only indicated with respect of the top member 1) substantially in parallel to the longitudinal direction of the spraying boom is defined. Likewise, the co-operation between the coupling members 4 and struts 5 is such, that a second axis of rotation 7 (again only indicated with respect to the top member 1) extending substantially perpendicularly to the longitudinal direction of the spraying boom is defined. As a result of this first axis of rotation 6 and second axis of rotation 7 the orientation of the struts 5 can be chosen in a wide range accommodating, for example, a varying distance between the top and bottom members 1, 2 in the longitudinal direction of the spraying boom or accommodating a varying width of at least one of the top and bottom members 1, 2.

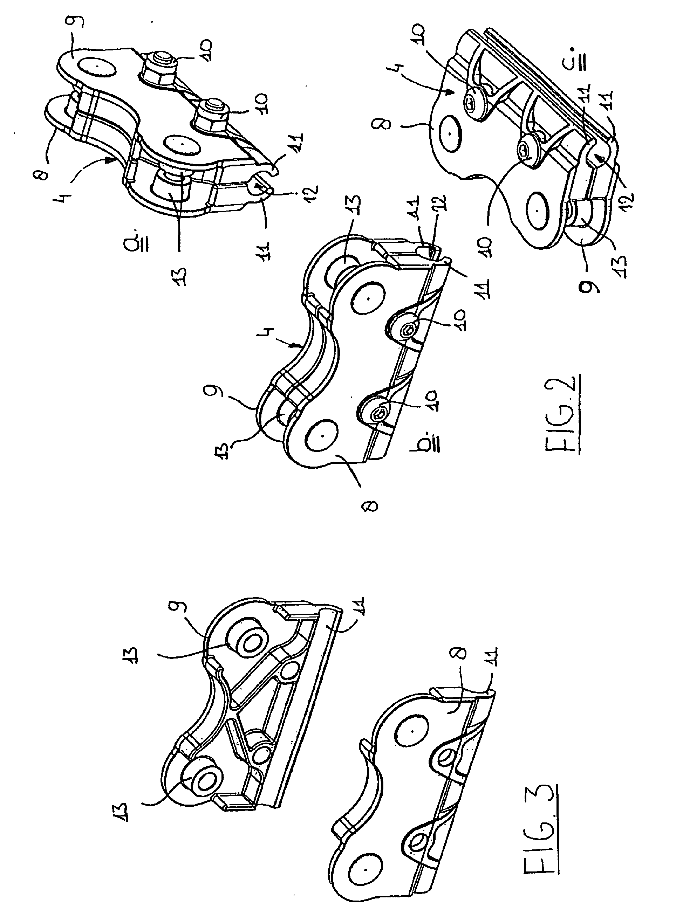

Details of the coupling members 4 will now be discussed referring to figures 2 and 3.

Firstly, figure 2 shows in three different perspective views an embodiment of a coupling member 4. The coupling member 4 comprises two, preferably identical, member halves 8 and 9 which are releasably joined by means of appropriate mounting means, such as bolts 10.

The member halves 8 and 9 each are provided with a longitudinally extending clamping part 11 for, together, defining a cylindrical recess 12 for clampingly receiving a cylindrical section 3 of a top member 1 or bottom member 2.

Inwardly projecting from each member half 8, are cylindrical hubs 13 which are meant for co-operation with an opening 14 in the ends of the struts 5 (see figure 1).

Instead of separate bolts 10 and hubs 13 it is possible, that the function of hubs 13 and bolts 10 is combined.

Figure 3 shows the member halves 8 and 9 in a spaced apart position. The bolts 10 are not shown.

The cylindrical recess 12 as defined by the clamping parts 11 of the member halves 8 and 9 defines the first axis of rotation 6. The hubs 13 of the member halves 8 and 9 each define a second axis of rotation 7. Before tightening the bolts 10 (or otherwise connecting the member halves 8 and 9) the orientation of the coupling member 4 relative to the cylindrical section 3 and the orientation of the strut 5 relative to the coupling member 4 can be chosen in correspondence with the shape of the spraying boom. Having chosen the correct orientations, the bolts 10 are tightened.

For increasing the strength of the connection between the coupling members 4 at one hand and the top and bottom members 1, 2 or struts 5 at the other hand, it is possible that at the interfaces between the coupling members 4 and the top and bottom members 1, 2 and/or the interfaces between the coupling members 4 and the struts 5 an adhesive is applied before the bolts 10 are tightened.

As illustrated in fig. 1 the top and bottom members 1, 2 are provided with integrally shaped hollow channels 15. These channels may be used for housing fluid lines or alike or may act themselves as such.

It should be noted, that notwithstanding the illustrated embodiment of the coupling member 4, it may also be shaped for receiving a number of struts differing from two, for example only one strut or three struts. This means, that the member halves 8 and 9 then should comprise a corresponding number of hubs 13.

The invention is not limited to the embodiments described before, which may be varied widely within the scope of the invention as defined by the claims.

## Claims

1. Spraying apparatus for connection to a vehicle, having at least one spraying boom, said spraying boom comprising longitudinally extending top (1) and bottom (2) members and struts (5) linking the top and bottom members, wherein the width of at least one of the top (1) and bottom (2) members and/or the distance between the top and bottom members varies in the longitudinal direction of the spraying boom, and wherein the ends of the struts (5) are linked to the respective top (1) and bottom (2) members by means of coupling members (4), defining for the struts (5) a first axis of rotation (6) substantially in parallel to the longitudinal direction of the spraying boom and a second axis of rotation (7) substantially perpendicularly thereto, **characterized in that**, the second axis of rotation (7) is oriented such, that by a rotation of the struts (5) around said axis (7) the angle enclosed by the first axis of rotation (6) and the struts (5) is changed.

2. Spraying apparatus according to claim 1, **characterized in that** the top (1) and bottom (2) members of the spraying boom define longitudinally extending, at least partially cylindrical sections (3), whereas each coupling member (4) is provided with a longitudinally extending clamping part (11) with correspondingly shaped cylindrical recess (12) for the reception of the cylindrical section (3) for defining the first axis of rotation (6), and wherein the coupling member (4) and a corresponding strut (5) comprise co-operating parts for defining the second axis of rotation (7).

3. Spraying apparatus according to claim 2, **characterized in that** the coupling member (4) is adapted for the connection to at least two struts (5).

4. Spraying apparatus according to claim 2 or 3, **characterized in that** the coupling member (4) comprises two, preferably identical, member halves (8, 9) which are releasably joined by means of appropriate mounting means (10).

5. Spraying apparatus according to claim 4, **characterized in that** the mounting means (10) comprise bolts that at the same time define each second axis of rotation (7).

6. Spraying apparatus according to claim 5, **characterised in that** at the interfaces between the coupling members (4) and the top (1) and bottom (2) members and/or the interfaces between the coupling members (4) and the struts (5) an adhesive is applied.

7. Spraying apparatus according to any of the previous claims, **characterized in that** the spraying boom comprises multiple top (1) and/or bottom (2) members which are integrally shaped into profiled top and/or bottom members.

8. Spraying apparatus according to any of the claims 2-7, **characterized in that** the cylindrical sections (3) of the top and bottom members are hollow for housing fluid lines or for acting themselves as fluid lines.

9. Coupling member (4) for application in a spraying apparatus having at least one spraying boom, said spraying boom comprising longitudinally extending top (1) and bottom (2) members and struts (5) linking the top and bottom members, wherein the width of at least one of the top and bottom members and/or the distance between the top and bottom members varies in the longitudinal direction of the spraying boom, **characterized in that** the coupling member (4) is provided with a longitudinally extending clamping part (11) with cylindrical recess (12) for the reception of a longitudinally extending correspondingly shaped cylindrical section (3) of a top (1) or bottom (2) member for defining a first axis of rotation (6) substantially in parallel to the longitudinal direction of the spraying boom, and wherein the coupling member further comprises parts for defining together wit co-operating parts of the struts a second axis of rotation (7) substantially perpendicularly to the first axis of rotation (6), the second axis of rotation (7) is oriented such, that by a rotation of the struts (5) around said axis (7) the angle enclosed by the first axis of rotation (6) and the struts (5) is changed.

10. Coupling member according to claim 9, **characterized in that** the coupling member (4) provided with parts for defining a second axis of rotation (7) with at least two struts (5).

11. Coupling member according to claim 10 or 11, **characterized in that** the coupling member (4) comprises two, preferably identical, member halves (8, 9) which are releasably joined by means of appropriate mounting means (10).

12. Coupling member according to claim 11, **characterized in that** the mounting means (10) comprise bolts that at the same time define each second axis of rotation (7).

13. Spraying boom comprising longitudinally extending top (1) and bottom (2) members and struts (5) linking the top and bottom members, wherein the width of at least one of the top (1) and bottom (2) members and/or the distance between the top and bottom members varies in the longitudinal direction of the spraying boom, and wherein the ends of the struts (5) are linked to the respective top (1) and bottom (2) members by means of coupling members (4), defining for the struts (5) a first axis of rotation (6) substantially in parallel to the longitudinal direction of the spraying boom and a second axis of rotation (7) substantially perpendicularly thereto, **characterized in that**
the second axis of rotation (7) is oriented such, that by a rotation of the struts (5) around said axis (7) the angle enclosed by the first axis of rotation (6) and the struts (5) is changed.

## Patentansprüche

1. Sprühvorrichtung zum Verbinden mit einem Fahrzeug, aufweisend: wenigstens einen Sprüh-Ausleger, wobei der Sprüh-Ausleger ein sich längs erstreckendes oberes Element (1) und ein sich längs erstreckendes unteres Element (2) sowie Streben (5) aufweist, die das obere und das untere Element verbinden, wobei die Breite von wenigstens einem von dem oberen Element (1) und dem unteren Element (2) und/oder der Abstand zwischen dem oberen und dem unteren Element in der Längsrichtung des Sprüh-Auslegers variiert, und wobei die Enden der Streben (5) mit den jeweiligen oberen (1) und unteren (2) Elementen mittels Kuppelelementen (4) verbunden sind, die für die Streben (5) eine erste Drehachse (6), die im Wesentlichen parallel zu der Längsrichtung des Sprüh-Auslegers ist, und eine zweite Drehachse (7) definieren, die im Wesentlichen senkrecht dazu ist,
**dadurch gekennzeichnet, dass** die zweite Drehachse (7) derart ausgerichtet ist, dass durch ein Schwenken der Streben (5) um die Achse (7) herum der von der ersten Drehachse (6) und den Streben (5) eingeschlossene Winkel verändert wird.

2. Sprühvorrichtung gemäß Anspruch 1, **dadurch gekennzeichnet, dass** das obere Element (1) und das untere Element (2) des Sprüh-Auslegers sich längs erstreckende, zumindest teilweise zylindrische Abschnitte (3) definieren, wobei jedes Kuppelelement (4) mit einem sich längs erstreckenden Klemmabschnitt (11) mit einer dementsprechend geformten, zylindrischen Ausnehmung (12) versehen ist zum Aufnehmen des zylindrischen Abschnitts (3) zum Definieren der ersten Drehachse (6), und wobei das Kuppelelement (4) und eine zugeordnete Strebe (5) zusammenwirkende Abschnitte aufweisen zum Definieren der zweiten Drehachse (7).

3. Sprühvorrichtung gemäß Anspruch 2, **dadurch gekennzeichnet, dass** das Kuppelelement (4) zum Verbinden mit wenigstens zwei Streben (5) angepasst ist.

4. Sprühvorrichtung gemäß Anspruch 2 oder 3, **dadurch gekennzeichnet, dass** das Kuppelelement (4) zwei, bevorzugt identische Elementhälften (8, 9) aufweist, welche mittels geeigneter Befestigungsmittel (10) lösbar zusammengefügt sind.

5. Sprühvorrichtung gemäß Anspruch 4, **dadurch gekennzeichnet, dass** die Befestigungsmittel (10) Schrauben aufweisen, die gleichzeitig jeweils eine zweite Drehachse (7) definieren.

6. Sprühvorrichtung gemäß Anspruch 5, **dadurch gekennzeichnet, dass** auf die Grenzflächen zwischen den Kuppelelementen (4) und dem oberen Element (1) sowie dem unteren Element (2) und/oder auf die Grenzflächen zwischen den Kuppelelementen (4) und den Streben (5) ein Klebstoff aufgebracht ist.

7. Sprühvorrichtung gemäß einem der vorhergehenden Ansprüche, **dadurch gekennzeichnet, dass** der Sprüh-Ausleger mehrere obere (1) und/oder untere (2) Elemente aufweist, welche integral zu einem oberen und/oder einem unteren Profilelement geformt sind.

8. Sprühvorrichtung gemäß einem der Ansprüche 2-7, **dadurch gekennzeichnet, dass** die zylindrischen Abschnitte (3) des oberen und des unteren Elements hohl sind zum Aufnehmen von Fluidleitungen oder um selbst als Fluidleitungen zu dienen.

9. Kuppelelement (4) zur Verwendung in einer Sprühvorrichtung mit wenigstens einem Sprüh-Ausleger, wobei der Sprüh-Ausleger ein sich längs erstreckendes oberes Element (1) und ein sich längs erstreckendes unteres Element (2) sowie Streben (5) aufweist, die das obere und das untere Element verbinden, wobei die Breite von wenigstens einem von dem oberen und dem unteren Element und/oder der Abstand zwischen dem oberen und dem unteren Element in Längsrichtung des Sprüh-Auslegers variiert,
**dadurch gekennzeichnet, dass** das Kuppelelement (4) mit einem sich längs erstreckenden Klemmabschnitt (11) mit einer zylindrischen Ausnehmung (12) versehen ist zum Aufnehmen eines sich längs erstreckenden, dementsprechend geformten, zylindrischen Abschnitts (3) eines oberen Elements (1) oder eines unteren Elements (2) zum Definieren einer ersten Drehachse (6), die im Wesentlichen parallel zu der Längsrichtung des Sprüh-Auslegers ist, und wobei das Kuppelelement ferner Abschnitte aufweist, die dazu dienen, zusammen mit zusammenwirkenden Abschnitten der Streben eine zweite Drehachse (7) zu definieren, die im Wesentlichen senkrecht zu der ersten Drehachse (6) ist, und wobei die zweite Drehachse (7) derart ausgerichtet, dass durch ein Schwenken der Streben (5) um die Achse (7) herum der von der ersten Drehachse (6) und den Streben (5) eingeschlossene Winkel verändert wird.

10. Kuppelelement gemäß Anspruch 9, **dadurch gekennzeichnet, dass** das Kuppelelement (4) mit Abschnitten versehen ist zum Definieren einer zweiten Drehachse (7) mit wenigstens zwei Streben (5).

11. Kuppelelement gemäß Anspruch 10 oder 11, **dadurch gekennzeichnet, dass** das Kuppelelement (4) zwei, bevorzugt identische Elementhälften (8, 9) aufweist, welche mittels geeigneter Befestigungsmittel (10) lösbar zusammengefügt sind.

12. Kuppelelement gemäß Anspruch 11, **dadurch gekennzeichnet, dass** die Befestigungsmittel (10) Schrauben aufweisen, die gleichzeitig jeweils eine zweite Drehachse (7) definieren.

13. Sprüh-Ausleger mit einem sich längs erstreckenden oberen Element (1) und einem sich längs erstreckenden unteren Element (2) sowie Streben (5), die das obere und das untere Element verbinden, wobei die Breite von wenigstens einem von dem oberen Element (1) und dem unteren Element (2) und/oder der Abstand zwischen dem oberen und dem unteren Element in Längsrichtung des Sprüh-Auslegers variiert, und wobei die Enden der Streben (5) mit den jeweiligen oberen (1) und unteren (2) Elementen mittels Kuppelelementen (4) verbunden sind, die für die Streben (5) eine erste Drehachse (6), die im Wesentlichen parallel zur Längsrichtung des Sprüh-Auslegers ist, und eine zweite Drehachse (7) definieren, die im Wesentlichen senkrecht dazu ist,
**dadurch gekennzeichnet, dass** die zweite Drehachse (7) derart ausgerichtet ist, dass durch ein Schwenken der Streben (5) um die Achse (7) herum der von der ersten Drehachse (6) und den Streben (5) eingeschlossene Winkel verändert wird.

## Revendications

1. Appareil pulvérisateur adapté pour être relié à un véhicule, ayant au moins un mât de pulvérisation, ledit mât de pulvérisation comprenant des éléments supérieur (1) et inférieur (2) s'étendant longitudinalement et des entretoises (5) reliant les éléments supérieur et inférieur, dans lequel la largeur d'au moins un des éléments supérieur (1) et inférieur (2) et/ou la distance entre les éléments supérieur et inférieur varie dans la direction longitudinale du mât de pulvérisation, et dans lequel les extrémités des entretoises (5) sont reliées aux éléments supérieur (1) et inférieur (2) respectifs au moyen d'éléments de couplage (4) définissant pour les entretoises (5) un premier axe de rotation (6) sensiblement en parallèle à la direction longitudinale du mât de projection et un deuxième axe de rotation (7) sensiblement perpendiculaire à celui-ci, **caractérisé en ce que** le deuxième axe de rotation (7) est orienté de sorte que par une rotation des entretoises (5) autour dudit axe (7), l'angle défini par le premier axe de rotation (6) et les entretoises (5) est modifié.

2. Appareil pulvérisateur selon la revendication 1, **caractérisé en ce que** les éléments supérieur (1) et inférieur (2) du mât de pulvérisation définissent des sections (3), au moins partiellement cylindriques s'étendant longitudinalement, tandis que chaque élément de couplage (4) est muni d'une partie de serrage (11) s'étendant longitudinalement avec un évidement cylindrique (12) de forme correspondante pour la réception de la section cylindrique (3) pour définir le premier axe de rotation (6) et dans lequel l'élément de couplage (4) et une entretoise correspondante (5) comportent des parties coopérantes pour définir le deuxième axe de rotation (7).

3. Appareil pulvérisateur selon la revendication 2, **caractérisé en ce que** l'élément de couplage (4) est agencé pour la liaison à au moins deux entretoises (5).

4. Appareil pulvérisateur selon la revendication 2 ou 3, **caractérisé en ce que** l'élément de couplage (4) comporte deux moitiés d'élément (8, 9), de préférence identiques, qui sont réunies de façon libérable au moyen d'un moyen de montage approprié (10).

5. Appareil pulvérisateur selon la revendication 4, **caractérisé en ce que** le moyen de montage (10) comporte des boulons qui en même temps définissent chaque second axe de rotation (7).

6. Appareil pulvérisateur selon la revendication 5, **caractérisé en ce qu'**aux interfaces entre les éléments de couplage (4) et les éléments supérieur (1) et inférieur (2) et/ou les interfaces entre les éléments de couplage (4) et les entretoises (5), on applique un adhésif.

7. Appareil pulvérisateur selon l'une quelconque des revendications précédentes, **caractérisé en ce que** le mât de pulvérisation comprend de multiples éléments supérieurs (1) et/ou inférieurs (2) qui sont conformés intégralement selon des éléments supérieurs et/ou inférieurs profilés.

8. Appareil pulvérisateur selon l'une quelconque des revendications 2 à 7, **caractérisé en ce que** les sections cylindriques (3) des éléments supérieur et inférieur sont creuses pour loger des conduits de fluide ou pour servir elles-mêmes de conduits de fluide.

9. Elément de couplage (4) pour l'application dans un appareil pulvérisateur ayant au moins un mât de pulvérisation, ledit mât de pulvérisation comprenant des éléments supérieur (1) et inférieur (2) s'étendant longitudinalement et des entretoises (5) reliant les éléments supérieur et inférieur, dans lequel la largeur d'au moins un des éléments supérieur et inférieur et/ou la distance entre les éléments supérieur et inférieur varie dans la direction longitudinale du mât de pulvérisation, **caractérisé en ce que** l'élément de couplage (4) est muni d'une partie de serrage (11) s'étendant longitudinalement avec un évidement cylindrique (12) pour la réception d'une section cylindrique (3) de forme correspondante s'étendant longitudinalement d'un élément supérieur (1) ou inférieur (2) pour définir un premier axe de rotation (6) sensiblement en parallèle à la direction longitudinale du mât de pulvérisation et dans lequel l'élément de couplage comprend, en outre, des parties pour définir conjointement avec les parties coopérantes des entretoises, un deuxième axe de rotation (7) sensiblement perpendiculairement au premier axe de rotation (6), le deuxième axe de rotation (7) est orienté de sorte que par une rotation des entretoises (5) autour dudit axe (7), l'angle défini par le premier axe de rotation (6) et les entretoises (5) est modifié.

10. Elément de couplage selon la revendication 9, **caractérisé en ce que** l'élément de couplage (4) est muni de parties pour définir un deuxième axe de rotation (7) avec au moins deux entretoises (5).

11. Elément de couplage selon la revendication 10 ou 11, **caractérisé en ce que** l'élément de couplage (4) comporte deux moitiés d'élément (8, 9), de préférence identiques, qui sont réunies de façon libérable au moyen d'un moyen de montage approprié (10).

12. Elément de couplage selon la revendication 11, **caractérisé en ce que** les moyens de montage (10) comportent des boulons qui, en même temps, définissent chaque second axe de rotation (7).

13. Mât de pulvérisation comprenant des éléments supérieur (1) et inférieur (2) s'étendant longitudinalement et des entretoises (5) reliant les éléments supérieur et inférieur, dans lequel la largeur d'au moins un des éléments supérieur (1) et inférieur (2) et/ou la distance entre les éléments supérieur et inférieur varie dans la direction longitudinale du mât de pulvérisation et dans lequel les extrémités des entretoises (5) sont reliées aux éléments supérieur (1) et inférieur (2) respectifs au moyen d'éléments de couplage (4) définissant pour les entretoises (5) un premier axe de rotation (6) sensiblement en parallèle à la direction longitudinale du mât de pulvérisation et un deuxième axe de rotation (7) sensiblement perpendiculaire à celui-ci, **caractérisé en ce que** le second axe de rotation (7) est orienté de sorte que par une rotation des entretoises (5) autour dudit axe (7), l'angle défini par le premier axe de rotation (6) et les entretoises (5) est modifié.
